# EUROPEAN PATENT APPLICATION

(11) **EP 4 086 124 A2**
(43) Date of publication of application: **09.11.2022**
(21) Application number: 22197309.2
(22) Date of filing: 23.09.2022
(51) Int. Cl.: B60R 25/20, B60R 25/30

(54) **VEHICLE SECURITY CHECK METHOD, SYSTEM AND APPARATUS, DEVICE AND STORAGE MEDIUM**

(30) Priority: 23.09.2021 CN 202111117263
(71) Applicant: Apollo Intelligent Connectivity (Beijing) Technology Co., Ltd., Beijing 100176 (CN)
(72) Inventor: CAO, Liang, Beijing, 100176 (CN); CUI, Zhiyang, Beijing, 100176 (CN)
(74) Representative: Lucke, Andreas

(57) **Abstract**

The present disclosure provides a method for a vehicle security check, a system and an apparatus, a device and a storage medium. The present disclosure relates to the technical field of information management, and in particular, to the technical fields of Internet of Vehicles, autonomous driving and intelligent cockpits. The specific implementation method includes: obtaining target vehicle identification information of a target vehicle and hardware identification information of a target sensor of the target vehicle; determining whether the target sensor is credible based on a pre-registered vehicle identification of a credible vehicle and a pre-registered hardware identification of a corresponding credible sensor; performing a security check on the target vehicle based on current vehicle owner information of the target vehicle and current security scenario information under the condition that the target sensor is credible; and turning off the target sensor under the condition that the target vehicle passes the security check. The technical solutions provided by the present disclosure can prevent a sensor from collecting scenario information, thereby improving the security of information of a target region where the target vehicle enters after passing the security check.

## Description

### TECHNICAL FIELD

The present disclosure relates to the technical field of information management, and in particular, to the technical fields of Internet of Vehicles, autonomous driving and intelligent cockpits.

### BACKGROUND

In order to improve the information security of designated regions, security checks are required for vehicles entering the designated regions.

### SUMMARY

The present disclosure provides a method for a vehicle security check, a system, an apparatus, a device and a storage medium, which are used for improving information security of regions.

According to an aspect of the present disclosure, a method for a vehicle security check is provided, the method including:
obtaining target vehicle identification information of a target vehicle and hardware identification information of a target sensor of the target vehicle;
determining whether the target sensor is credible based on the hardware identification information of the target sensor, a pre-registered vehicle identification of a credible vehicle and a pre-registered hardware identification of a corresponding credible sensor;
performing a security check on the target vehicle based on current vehicle owner information of the target vehicle and current security scenario information under the condition that the target sensor is credible; and
turning off the target sensor under the condition that the target vehicle passes the security check.

According to another aspect of the present disclosure, a system for a vehicle security check is provided, the system including: a device for a security check;
the device for a security check is configured to obtain target vehicle identification information of a target vehicle and hardware identification information of a target sensor of the target vehicle; determine whether the target sensor is credible based on the hardware identification information of the target sensor, a pre-registered vehicle identification of a credible vehicle and a pre-registered hardware identification of a corresponding credible sensor; perform a security check on the target vehicle based on current vehicle owner information of the target vehicle and current security scenario information under the condition that the target sensor is credible; and turn off the target sensor under the condition that the target vehicle passes the security check.

According to another aspect of the present disclosure, an apparatus for a vehicle security check is provided, the apparatus including:
an information obtaining module, configured to obtain target vehicle identification information of a target vehicle and hardware identification information of a target sensor of the vehicle;
a sensor credibility determination module, configured to determine whether the target sensor is credible based on the hardware identification information of the target sensor, a pre-registered vehicle identification of a credible vehicle and a pre-registered hardware identification of a corresponding credible sensor;
a security check module, configured to perform a security check on the target vehicle based on current vehicle owner information of the target vehicle and current security scenario information under the condition that the target sensor is credible; and
a sensor turn-off module, configured to turn off the target sensor under the condition that the target vehicle passes the security check.

According to another aspect of the present disclosure, a non-transitory computer-readable storage medium storing computer instructions is provided, the computer instructions cause a computer to execute any method for a vehicle security check described above.

According to another aspect of the present disclosure, a computer program product is provided, including a computer program, where the computer program, when executed by a processor, implements any method for a vehicle security check described above.

It should be understood that contents described in this section are neither intended to identify key or important features of the embodiments of the disclosure, nor intended to limit the scope of the present disclosure. Other features of the present disclosure will become readily understood in conjunction with the following description.

### BRIEF DESCRIPTION OF THE DRAWINGS

The accompanying drawings are used for better understanding of this solution, and do not constitute limitations to the present disclosure.
FIG. 1 is a schematic flowchart of a first embodiment of a method for a vehicle security check provided according to the present disclosure;
FIG. 2 is a schematic flowchart of a second embodiment of a method for a vehicle security check provided according to the present disclosure;
FIG. 3a is a schematic flowchart of a third embodiment of a method for a vehicle security check provided according to the present disclosure;
FIG. 3b is a schematic diagram of a registration process of a vehicle sensor in the embodiment shown in FIG. 3a;
FIG. 3c is a schematic diagram of a replacement process of the vehicle sensor in the embodiment shown in FIG. 3a;
FIG. 3d is a schematic diagram of a registration process of security information in the embodiment shown in FIG. 3a;
FIG. 4 is a schematic flowchart of a fourth embodiment of a method for a vehicle security check provided according to the present disclosure;
FIG. 5a is a schematic structural diagram of a first embodiment of a system for a vehicle security check provided according to the present disclosure;
FIG. 5b is a schematic diagram of a security check process according to the system for a vehicle security check shown in FIG. 5a;
FIG. 6 is a schematic structural diagram of a first embodiment of an apparatus for a vehicle security check provided according to the present disclosure;
FIG. 7 is a schematic structural diagram of a second embodiment of an apparatus for a vehicle security check provided according to the present disclosure; and
FIG. 8 is a block diagram of an electronic device used to implement the method for a vehicle security check according to the embodiments of the present disclosure.

### DETAILED DESCRIPTION OF EMBODIMENTS

Example embodiments of the present disclosure are described below with reference to the accompanying drawings, which include various details of the embodiments of the present disclosure to facilitate understanding and should be considered as example only. Accordingly, those of ordinary skill in the art should recognize that various changes and modifications can be made to the embodiments described herein without departing from the scope and spirit of the present disclosure. Also, descriptions of well-known functions and structures are omitted from the following description for clarity and conciseness.

In order to improve the security of information in a designated region, the present disclosure provides a method and apparatus for a vehicle security check, system, a device and a storage medium.

First, a method for a vehicle security check provided by the present disclosure will be described in detail.

The method for a vehicle security check provided by the present disclosure can be applied to an electronic device for performing a security check.

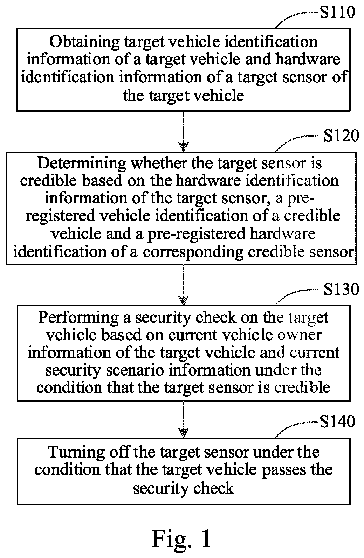

With reference to FIG. 1, a first embodiment of a method for a vehicle security check provided by the present disclosure includes the following steps.

Step S110: Obtaining target vehicle identification information of a target vehicle and hardware identification information of a target sensor of the target vehicle.

In this embodiment, the electronic device for performing a security check may obtain the target vehicle identification information and the hardware identification information of the target sensor of the vehicle in at least the following two modes:
Mode 1: The vehicle owner inputs the information by means of an input device of the electronic device, such as a touch screen or a keyboard.
Mode 2: The vehicle owner scans a two-dimensional code displayed on a display screen of the electronic device through a mobile phone, and inputs the information on an information input page displayed on the mobile phone.

In this embodiment, the target vehicle identification information may include a license plate number and a VIN (Vehicle Identification Number), and the hardware identification information of the target sensor may include a hardware ID of the sensor and other information. In addition, the mobile phone number of the vehicle owner may alternatively be obtained.

In this embodiment, the target sensor mainly refers to a sensor capable of collecting scenario information, such as a vehicle-mounted radar, a vehicle-mounted camera and a recording device.

Step S120: Determining whether the target sensor is credible based on the hardware identification information of the target sensor, a pre-registered vehicle identification of a credible vehicle and a pre-registered hardware identification of a corresponding credible sensor.

Step S130: Performing a security check on the target vehicle based on current vehicle owner information of the target vehicle and current security scenario information under the condition that the target sensor is credible.

Step S140: Turning off the target sensor under the condition that the target vehicle passes the security check.

It can be seen from the above embodiment that, by applying the method for a vehicle security check provided by the present disclosure, in the case that the vehicle passes the security check, the sensor of the target vehicle is turned off, which can prevent the sensor from collecting scenario information, thereby improving the security of information of a target region where the target vehicle enters after passing the security check.

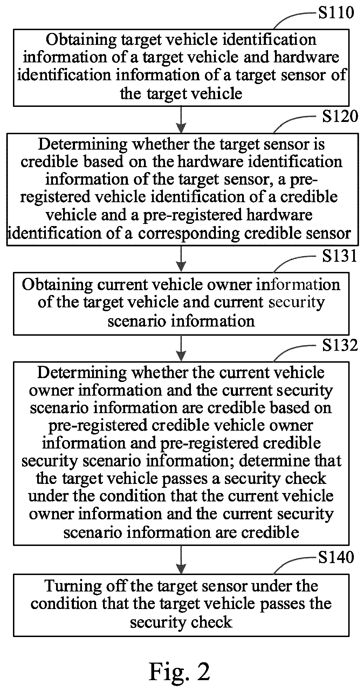

With reference to FIG. 2, a second embodiment of a method for a vehicle security check provided by the present disclosure is shown. This embodiment refines step S130 on the basis of the embodiment shown in FIG. 1. Specifically, step S130 may include the following steps.

Step S131: Obtaining current vehicle owner information of the target vehicle and current security scenario information.

The current vehicle owner information may be manually input by the vehicle owner; and the current security scenario information may be selected by security personnel from a variety of pre-stored scenario information.

In this embodiment, the current security scenario information may include: current security location information, current security personnel information, and software and hardware information of an electronic device for performing a security check, such as: system software version information, software configuration information, or hardware configuration information of the electronic device.

Step S132: Determining whether the current vehicle owner information and the current security scenario information are credible based on pre-registered credible vehicle owner information and pre-registered credible security scenario information; and determining that the target vehicle passes the security check under the condition that the current vehicle owner information and the current security scenario information are credible.

In this embodiment, the security check is performed on the target vehicle by determining, through the pre-registered credible vehicle owner information and the pre-registered credible security scenario information, whether the current vehicle owner information and the current security scenario information are credible, so that the reliability of a result of the security check can be further ensured.

In other embodiments, a pre-registered vehicle identification of a vehicle and a pre-registered hardware identification of a corresponding credible sensor may be stored by a vehicle management platform in the Internet of Vehicles; and pre-registered credible vehicle owner information and pre-registered credible security scenario information may be stored by a security management platform in the Internet of Vehicles.

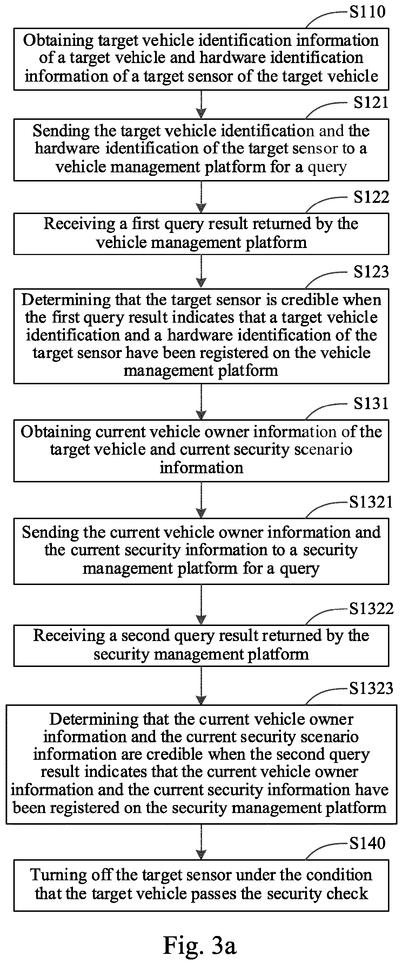

Specifically, with reference to FIG. 3a, a third embodiment of a method for a vehicle security check provided by the present disclosure is shown. This embodiment refines step S120 and step S132 on the basis of the embodiment shown in FIG. 2.

As shown in FIG. 3a, step S120 may specifically include the following steps.

Step S121: Sending the target vehicle identification and the hardware identification of the target sensor to a vehicle management platform for a query.

In this embodiment, the vehicle management platform may store a pre-registered vehicle identification of a vehicle and a pre-registered hardware identification of a corresponding credible sensor.

Step S122: Receiving a first query result returned by the vehicle management platform.

Step S123: Determining that the target sensor is credible when the first query result indicates that the target vehicle identification and the hardware identification of the target sensor have been registered on the vehicle management platform.

In this embodiment, the pre-registered vehicle identification of the vehicle and the pre-registered hardware identification of the corresponding credible sensor may not be stored in the electronic device for performing a security check, but may be queried based on the Internet of Vehicles on the vehicle management platform that stores this information, as required. Generally, the data volume of such information is very large. Therefore, the query on the vehicle management platform can save storage resources of the electronic device, and further can save hardware costs.

As shown in FIG. 3a, step S132 may specifically include the following steps.

Step S1321: Sending the current vehicle owner information and the current security information to a security management platform for a query.

In this embodiment, the security management platform may store pre-registered credible vehicle owner information and pre-registered credible security scenario information.

Step S1322: Receiving a second query result returned by the security management platform.

Step S1323: Determining that the current vehicle owner information and the current security scenario information are credible when the second query result indicates that the current vehicle owner information and the current security information have been registered on the security management platform.

In this embodiment, the pre-registered credible vehicle owner information and the pre-registered credible security scenario information may not be stored in the electronic device for performing a security check, but may be queried based on the Internet of Vehicles on the security management platform that stores this information, as required. Generally, the data volume of such information is very large. Therefore, the query on the security management platform can further save storage resources of the electronic device, and can further save hardware costs.

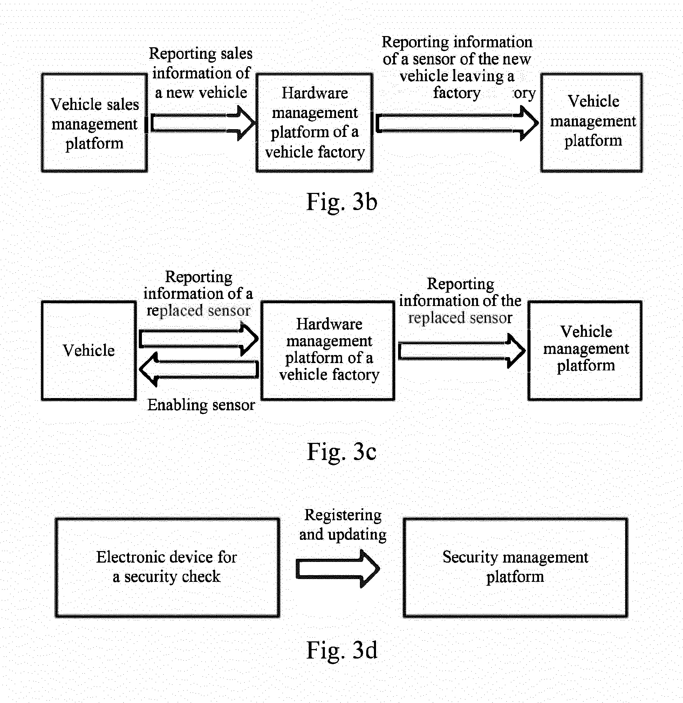

With reference to FIG. 3b, in this embodiment, a registration process of a sensor of a vehicle may include the following contents.

After the vehicle is sold, a vehicle sales management platform (such as a vehicle sales 4S store) reports the new sales to a hardware management platform of a vehicle factory (such as a cloud platform of a vehicle factory); the hardware management platform of the vehicle factory then reports sensor information of the new vehicle leaving the factory to a vehicle management platform (such as a vehicle administration office platform) to complete sensor registration. The vehicle management platform stores these registered vehicle identifications and sensor identifications as vehicle identifications of credible vehicles and pre-registered hardware identifications of corresponding credible sensors.

In actual scenarios, the vehicle sales 4S store can report sales information to the cloud platform of the vehicle factory after the vehicle is sold, and the cloud platform of the vehicle factory then reports the sensor information of the new vehicle leaving the factory to the vehicle administration office platform.

In some cases, if the sensor of the vehicle is replaced, information of the replaced sensor needs to be reported to the vehicle management platform for registration before the replaced sensor can be activated.

With reference to FIG. 3c, in this embodiment, a replacement process of a sensor of a vehicle may include the following contents.

The vehicle establishes a communication connection with the hardware management platform of the vehicle factory, and sends the information of the replaced sensor to the hardware management platform of the vehicle factory; the hardware management platform of the vehicle factory enables the replaced sensor by sending an instruction of turning on the sensor to the vehicle, and reports the information of the replaced sensor to the vehicle management platform, and the vehicle management platform updates the registration information of the vehicle.

With reference to FIG. 3d, in this embodiment, a registration process of security information may include the following contents.

In this embodiment, the electronic device for performing a security check may obtain a security location (such as a security post location) information, a security personnel information list, an identification of the electronic device, and software and hardware information of the electronic device, and the electronic device registers the information on the security management platform. If the information changes, the electronic device needs to update the information on the security management platform in real time.

In other embodiments, the registration may alternatively be performed manually, which is not limited in the present disclosure.

In this embodiment, the security management platform may be a management platform with law enforcement authority.

In this embodiment, the electronic device for performing a security check may be a terminal device of a sentry system. The sentry system is a security system, and its terminal device is usually arranged at a gate of a region where needs a security, so that the terminal device performs a security check on people or vehicles entering and exiting the region. The terminal device may be realized by an electronic device with functions such as an information input, an information collection, a wireless or wired communication, and an alarm.

In other embodiments, the target sensor may be turned off or on remotely by the hardware management platform of the vehicle factory.

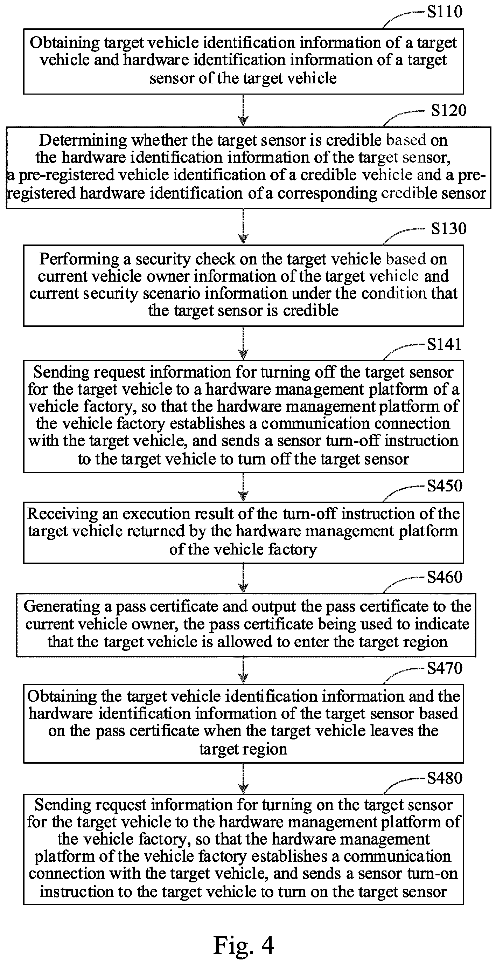

Specifically, with reference to FIG. 4, a fourth embodiment of a method for a vehicle security check provided by the present disclosure is shown. This embodiment refines step S140 on the basis of the embodiment shown in FIG. 1, and is added with relevant steps of turning on the sensor.

In this embodiment, step S140 specifically includes the following steps.

Step S141: Sending request information for turning off the target sensor for the target vehicle to the hardware management platform of the vehicle factory, the hardware management platform of the vehicle factory storing vehicle identification information of each vehicle leaving the factory and hardware identification information of a sensor of each vehicle, so that the hardware management platform of the vehicle factory establishes a communication connection with the target vehicle, and sends a sensor turn-off instruction to the target vehicle to turn off the target sensor.

In this embodiment, the hardware management platform of the vehicle factory establishes a communication connection with the target vehicle, which can realize remote and automatic turn-off of the target sensor. Compared with manual turn-off of the target sensor, the remote and automatic turn-off can not only improve the reliability of turn-off of the sensor, but also improve the turn-off efficiency.

In this embodiment, after it is determined that the target sensor of the target vehicle is turned off, the vehicle may be allowed to enter the target region, and the target sensor maybe turned on when the target vehicle leaves the target region.

As shown in FIG. 4, this embodiment may further include the following steps.

Step S450: Receiving an execution result of the turn-off instruction of the target vehicle returned by the hardware management platform of the vehicle factory.

In this embodiment, after turning off the target sensor, the target vehicle may return the execution result of the turn-off instruction to the hardware management platform of the vehicle factory, and the hardware management platform of the vehicle factory may then return the execution result to the electronic device for performing a security check.

Step S460: Generating a pass certificate and output the pass certificate to the current vehicle owner, the pass certificate being used to indicate that the target vehicle is allowed to enter the target region.

In this step, the electronic device for performing a security check may generate a two-dimensional pass code as a pass certificate, the pass code indicating that the target vehicle can pass, when it is determined based on the execution result of the turn-off instruction that the target sensor has been turned off. The two-dimensional pass code may be sent to the mobile phone of the vehicle owner, or may be directly printed on a paper and pasted on the target vehicle by security personnel.

Step S470: Obtaining the target vehicle identification information and the hardware identification information of the target sensor based on the pass certificate when the target vehicle leaves the target region.

In this step, the electronic device for performing a security check may obtain the target vehicle identification information and the hardware identification information of the target sensor by scanning the two-dimensional pass code displayed on the mobile phone of the vehicle owner or the two-dimensional pass code pasted on the target vehicle.

Step S480: Sending request information for turning on the target sensor for the target vehicle to the hardware management platform of the vehicle factory, so that the hardware management platform of the vehicle factory establishes a communication connection with the target vehicle, and sends a sensor turn-on instruction to the target vehicle to turn on the target sensor.

In this embodiment, when the target vehicle leaves the target region, the hardware management platform of the vehicle factory establishes a communication connection with the target vehicle, which can realize remote and automatic turn-on of the target sensor. Compared with manual turn-on of the target sensor, the remote and automatic turn-on can not only improve the reliability of turn-on of the sensor, but also improve the turn-on efficiency.

Then, a system for a vehicle security check provided by the present disclosure will be described in detail.

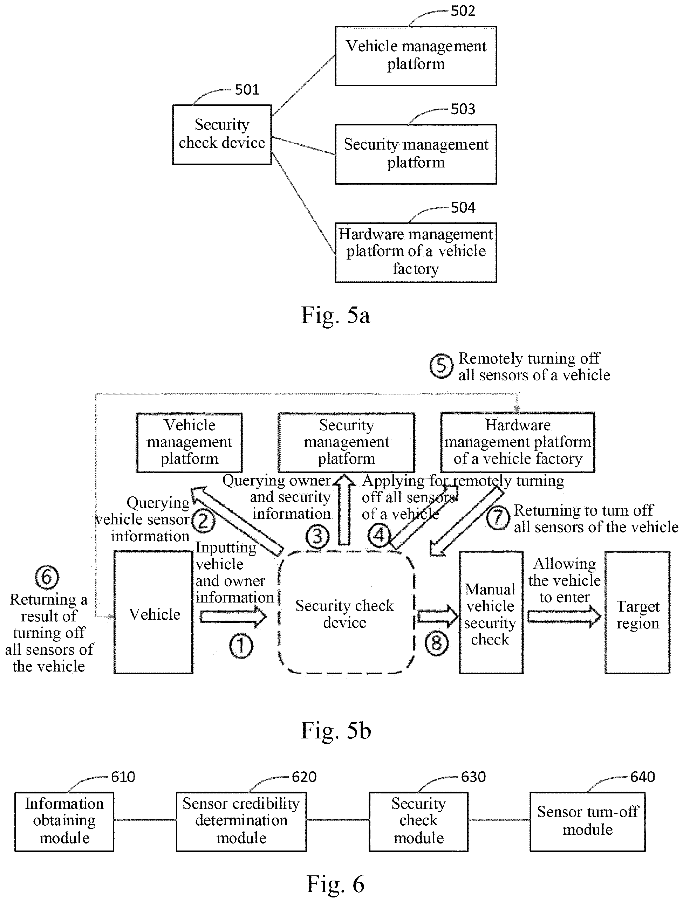

With reference to FIG. 5a, the system for a vehicle security check provided by the present disclosure may include a device 501 for a security check.

The device 501 for a security check is configured to: obtain target vehicle identification information of a target vehicle and hardware identification information of a target sensor of the target vehicle; determine whether the target sensor is credible based on the hardware identification information of the target sensor, a pre-registered vehicle identification of a credible vehicle and a pre-registered hardware identification of a corresponding credible sensor; perform a security check on the target vehicle based on current vehicle owner information of the target vehicle and current security scenario information under the condition that the target sensor is credible; and turn off the target sensor under the condition that the target vehicle passes the security check.

According to the system for a vehicle security check provided by the present disclosure, in the case that the target vehicle passes the security check, the sensor of the target vehicle is turned off, which can prevent the sensor from collecting scenario information, thereby improving the security of information of the target region where the target vehicle enters after passing the security check.

As shown in FIG. 5a, the system for a vehicle security check of this embodiment may further include a vehicle management platform 502.

The vehicle management platform 502 is configured to store pre-registered vehicle identification of a vehicle and a pre-registered hardware identification of a corresponding credible sensor.

In this way, the device 501 for a security check may send the target vehicle identification and the hardware identification of the target sensor to the vehicle management platform for a query; receive a first query result returned by the vehicle management platform 502; and determine that the target sensor is credible when the first query result indicates that the target vehicle identification and the hardware identification of the target sensor have been registered on the vehicle management platform 502.

As shown in FIG. 5a, the system for a vehicle security check in this embodiment may further include: a security management platform 503, configured to store pre-registered credible vehicle owner information and pre-registered credible security scenario information.

In this way, the device 501 for a security check may, after obtaining the current vehicle owner information of the target vehicle and the current security scenario information, send the current vehicle owner information and the current security scenario information to the security management platform 503 for a query; receive a second query result returned by the security management platform 503; determine that the current vehicle owner information and the current security scenario information are credible when the second query result indicates that the current vehicle owner information and the current security scenario information have been registered on the security management platform 503; and determine that the target vehicle passes the security check under the condition that the current vehicle owner information and the current security scenario information are credible.

As shown in FIG. 5a, the system for a vehicle security check in this embodiment may further include: a hardware management platform of a vehicle factory 504, configured to store vehicle identification information of each vehicle leaving the factory and hardware identification information of a sensor of the vehicle.

In this way, the device 501 for a security check may send request information for turning off the target sensor for the target vehicle to the hardware management platform of the vehicle factory 504, so that the hardware management platform of the vehicle factory 504 establishes a communication connection with the target vehicle, and sends a sensor turn-off instruction to the target vehicle to turn off the target sensor.

In addition, the device 501 for a security check in this embodiment may alternatively be configured to receive an execution result of the turn-off instruction of the target vehicle returned by the hardware management platform of the vehicle factory 504; and generate a pass certificate and output the pass certificate to the current vehicle owner, the pass certificate being used to indicate that the target vehicle is allowed to enter the target region.

Moreover, when the target vehicle leaves the target region, the device 501 for a security check may obtain the target vehicle identification information and the hardware identification information of the target sensor based on the pass certificate; and send request information for turning on the target sensor for the target vehicle to the hardware management platform of the vehicle factory 504, so that the hardware management platform of the vehicle factory 504 establishes a communication connection with the target vehicle, and sends a sensor turn-on instruction to the target vehicle to turn on the target sensor.

In this embodiment, the vehicle management platform and the security management platform can respectively store relevant registration information, which can reduce the occupation of storage resources of the security check device and save the hardware costs of the security check device. In addition, the target sensor can be turned off or on remotely by the hardware management platform of the vehicle factory. Compared with manual turn-off or turn-on of the target sensor, the remote and automatic turn-off or turn-on can not only improve the reliability of turn-off or turn-on of the sensor, but also improve the turn-off or turn-on efficiency.

According to the system for a vehicle security check shown in FIG. 5a, its security check process may be shown in FIG. 5b, including the following steps.

Step 1: inputting, when a target vehicle arrives at a security position of a target region, relevant information of the vehicle and owner into the security check device.

Specifically, when the security check device is a terminal device of a sentry system, a two-dimensional code provided by the sentry system can be scanned through the mobile phone of the vehicle owner, to input the relevant information of the vehicle and owner such as a mobile phone number of the vehicle owner, a license plate number, a VIN code, and a sensor hardware ID.

Of course, the relevant information of the vehicle and owner may alternatively be manually input through an input device provided by the terminal device.

Step 2: encrypting, after the security check device receives the relevant information of the vehicle and owner, the information and send the information as a query parameter to the vehicle management platform for a query to determine whether the target sensor of the target vehicle is credible.

Specifically, in this step, after receiving the information, the sentry system may send the encrypted license plate number, VIN code and sensor hardware ID as input parameters to a vehicle administration office platform (that is, the vehicle management platform) to query whether the hardware of the vehicle sensor has been replaced, if the sensor has been replaced, the sentry system will prompt security personnel to physically shield the sensor, and if the sensor has not been replaced, it is determined that the vehicle sensor is credible.

Step 3: encrypting, by the security check device, when it is determined that the target sensor is credible, current vehicle owner information and current security information, and sending encrypted current vehicle owner information and current security information as query parameters to the security management platform for a query.

Specifically, in this step, the sentry system may send an encrypted mobile phone number of the vehicle owner, encrypted post location information, an encrypted security personnel information list, and encrypted software and hardware information of the sentry system as parameters to a management platform with law enforcement authority (that is, the security management platform) to query whether the security information is credible and whether the vehicle owner is credible. If all are credible, step 4 is performed; if the security information is not credible, the management platform with law enforcement authority will notify relevant personnel to perform on-site check; and if the vehicle owner is not credible, the target vehicle will be refused to enter.

Step 4: sending, when it is determined that the current vehicle owner information and the current security scenario information are credible, request information for turning off the target sensor for the target vehicle to the hardware management platform of the vehicle factory.

Specifically, in this step, the sentry system may send an encrypted determination result of the vehicle administration office platform, an encrypted determination result of the management platform with law enforcement authority and an encrypted VIN code of the target vehicle as query parameters to a cloud platform of the vehicle factory to apply for remotely turning off all sensors of the target vehicle.

Step 5: establishing, by the hardware management platform of the vehicle factory, a communication connection with the target vehicle, and sending a sensor turn-off instruction to the target vehicle to turn off the target sensor.

Specifically, in this step, the cloud platform of the vehicle factory may remotely issue an instruction of turning off all sensors of the vehicle to the vehicle.

Step 6: returning, by the target vehicle, after receiving and executing the instruction, s an execution result of the turn-off instruction to the hardware management platform of the vehicle factory.

Specifically, in this step, after receiving and executing the instruction, the target vehicle may return the result to the cloud platform of the vehicle factory.

Step 7: returning, by the hardware management platform of the vehicle factory, the execution result of the turn-off instruction of the target vehicle to the security check device; and generating, by the security check device, a pass certificate and outputting the pass certificate to the current vehicle owner, the pass certificate being used to indicate that the target vehicle is allowed to enter the target region.

Specifically, in this step, the cloud platform of the vehicle factory may return the result to the sentry system, and the sentry system generates a two-dimensional pass code as a pass certificate, the pass code indicating that the target vehicle can pass. The two-dimensional pass code may be sent to the mobile phone of the vehicle owner, or may be directly printed on a paper and pasted on the target vehicle by security personnel.

Step 8: executing, by the security personnel, if the execution result of the turn-off instruction indicates that all sensors of the target vehicle have been turned off, further manual vehicle security check.

The manual vehicle security check may include: checking whether there is an external sensor (such as a tachograph); physically shielding, if there is the external sensor, the sensor (for example, covering the camera of the tachograph, etc.) before allowing the target vehicle to enter the target region; and directly allowing, if there is the external sensor, the target vehicle.

If the execution result of the turn-off instruction indicates that all sensors of the target vehicle cannot be turned off, all the sensors of the vehicle are physically shielded before allowing the target vehicle to enter.

In addition, in this embodiment, when the target vehicle leaves, if the sensors are not physically shielded, the vehicle owner should show the pass certificate. The security check device may obtain target vehicle identification information and hardware identification information of the target sensor based on the pass certificate, and send request information for turning on the target sensors for the target vehicle to the hardware management platform of the vehicle factory, so that the hardware management platform of the vehicle factory establishes a communication connection with the target vehicle, and sends a sensor turn-on instruction to the target vehicle to turn on the target sensors.

Specifically, in this step, after being scanned by a two-dimensional code scanning device of the sentry system (notifying the cloud platform of the vehicle factory to turn on the vehicle sensors in real time), the target vehicle is driven away from the target region. If there is a sensor that is physically shielded, the security personnel needs to check whether the shielding mode is complete. If the shielding mode is not complete, the vehicle will be detained for electronic evidence collection; otherwise, after being scanned by the two-dimensional code scanning device of the sentry system, the target vehicle is driven away from the target region.

It can be seen from the above embodiment that, by applying the security check system provided by the present disclosure, when the target vehicle passes the security check, the sensors of the target vehicle are turned off, which can prevent these sensors from collecting scenario information, thereby improving the security of information of the target region where the target vehicle enters after passing the security check.

Next, an apparatus for a vehicle security check provided by the present disclosure will be described in detail.

The apparatus for a vehicle security check provided by the present disclosure can be applied to an electronic device for performing a security check.

With reference to FIG. 6, a first embodiment of an apparatus for a vehicle security check provided by the present disclosure may include:
an information obtaining module 610, configured to obtain target vehicle identification information of a target vehicle and hardware identification information of a target sensor of the target vehicle;
a sensor credibility determination module 620, configured to determine whether the target sensor is credible based on the hardware identification information of the target sensor, a pre-registered vehicle identification of a credible vehicle and a pre-registered hardware identification of a corresponding credible sensor;
a security check module 630, configured to perform a security check on the target vehicle based on current vehicle owner information of the target vehicle and current security scenario information under the condition that the target sensor is credible; and
a sensor turn-off module 640, configured to turn off the target sensor under the condition that the target vehicle passes the security check.

In this embodiment, the sensor credibility determination module 620 may be specifically configured to send the target vehicle identification and the hardware identification of the target sensor to a vehicle management platform for a query, the vehicle management platform storing a pre-registered vehicle identification of a vehicle and a pre-registered hardware identification of a corresponding credible sensor; receive a first query result returned by the vehicle management platform; and determine that the target sensor is credible when the first query result indicates that the target vehicle identification and the hardware identification of the target sensor have been registered on the vehicle management platform.

In this embodiment, the sensor turn-off module 640 may be specifically configured to: send request information for turning off the target sensor for the target vehicle to a hardware management platform of a vehicle factory, the hardware management platform of the vehicle factory storing vehicle identification information of each vehicle leaving the factory and hardware identification information of a sensor of the vehicle, so that the hardware management platform of the vehicle factory establishes a communication connection with the target vehicle, and sends a sensor turn-off instruction to the target vehicle to turn off the target sensor.

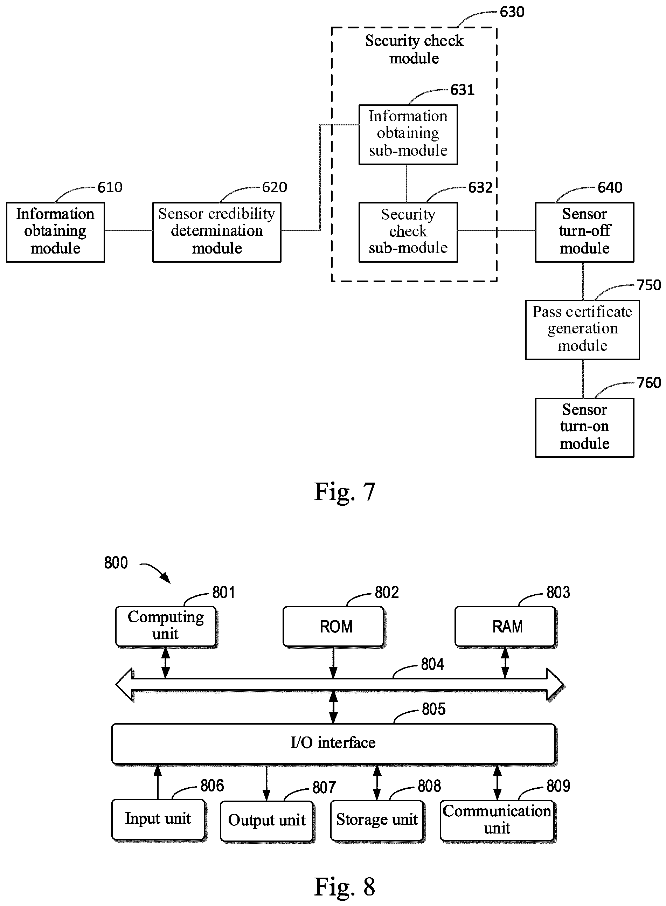

With reference to FIG. 7, a second embodiment of an apparatus for a vehicle security check provided by the present disclosure is shown. Based on FIG. 6, the security check module 630 may include: an information obtaining sub-module 631 and a security check sub-module 632.

The information obtaining sub-module 631 may be configured to obtain the current vehicle owner information of the target vehicle and the current security scenario information.

The security check sub-module 632 may be configured to determine whether the current vehicle owner information and the current security scenario information are credible based on pre-registered credible vehicle owner information and pre-registered credible security scenario information; and determine that the target vehicle passes the security check under the condition that the current vehicle owner information and the current security scenario information are credible.

In this embodiment, the security check sub-module 632 may send the current vehicle owner information and the current security information to a security management platform for a query, the security management platform storing pre-registered credible vehicle owner information and pre-registered credible security scenario information; receive a second query result returned by the security management platform; and determine that the current vehicle owner information and the current security scenario information are credible when the second query result indicates that the current vehicle owner information and the current security information have been registered on the security management platform.

As shown in FIG. 7, the apparatus for a security check of this embodiment may further include:
a pass certificate generation module 750, which may be configured to receive an execution result of a turn-off instruction of the target vehicle returned by the hardware management platform of the vehicle factory; and generate a pass certificate and output the pass certificate to the current vehicle owner, the pass certificate being used to indicate that the target vehicle is allowed to enter a target region; and
a sensor turn-on module 760, which may be configured to obtain target vehicle identification information and hardware identification information of the target sensor based on the pass certificate when the target vehicle leaves the target region; and send request information for turning on the target sensor for the target vehicle to the hardware management platform of the vehicle factory, so that the hardware management platform of the vehicle factory establishes a communication connection with the target vehicle, and sends a sensor turn-on instruction to the target vehicle to turn on the target sensor.

It can be seen from the above embodiment that, by applying the apparatus for a vehicle security check provided by the present disclosure, in the case that the target vehicle passes the security check, the sensor of the target vehicle is turned off, which can prevent the sensor from collecting scenario information, thereby improving the security of information of the target region where the target vehicle enters after passing the security check.

In the technical solutions of the present disclosure, the collection, storage, use, processing, transmission, provision and disclosure of user's personal information involved are all in compliance with the relevant laws and regulations, and do not violate the public order and good customs.

Finally, according to an embodiment of the present disclosure, the present disclosure further provides an electronic device, a readable storage medium, and a computer program product.

Fig. 8 shows a schematic block diagram of an example electronic device 800 that may be configured to implement embodiments of the present disclosure. The electronic device is intended to represent various forms of digital computers, such as a laptop computer, a desktop computer, a workbench, a personal digital assistant, a server, a blade server, a mainframe computer, and other suitable computers. The electronic device may alternatively represent various forms of mobile apparatuses, such as a personal digital assistant, a cellular phone, a smart phone, a wearable device, and other similar computing apparatuses. The components shown herein, the connections and relationships thereof, and the functions thereof are used as examples only, and are not intended to limit implementations of the present disclosure described and/or claimed herein.

As shown in Fig. 8, the device 800 includes a computing unit 801, which may execute various appropriate actions and processes in accordance with a computer program stored in a read-only memory (ROM) 802 or a computer program loaded into a random access memory (RAM) 803 from a storage unit 808. The RAM 803 may further store various programs and data required by operations of the device 800. The computing unit 801, the ROM 802, and the RAM 803 are connected to each other through a bus 804. An input/output (I/O) interface 805 is also connected to the bus 804.

A plurality of components in the device 800 is connected to the I/O interface 805, including: an input unit 806, such as a keyboard and a mouse; an output unit 807, such as various types of displays and speakers; a storage unit 808, such as a magnetic disk and an optical disk; and a communication unit 809, such as a network card, a modem, and a wireless communication transceiver. The communication unit 809 allows the device 800 to exchange information/data with other devices through a computer network such as the Internet and/or various telecommunication networks.

The computing unit 801 may be various general purpose and/or specific purpose processing components having a processing capability and a computing capability. Some examples of the computing unit 801 include, but are not limited to, a central processing unit (CPU), a graphics processing unit (GPU), various specific purpose artificial intelligence (AI) computing chips, various computing units running a machine learning model algorithm, a digital signal processor (DSP), and any appropriate processor, controller, micro-controller, and the like. The computing unit 801 executes various methods and processes described above, such as the method for a vehicle security check. For example, in some embodiments, the method for a vehicle security check may be implemented as a computer software program that is tangibly included in a machine readable medium, such as the storage unit 808. In some embodiments, some or all of the computer programs may be loaded and/or installed onto the device 800 via the ROM 802 and/or the communication unit 809. When the computer program is loaded into the RAM 803 and executed by the computing unit 801, one or more steps of the method for a vehicle security check described above may be executed. Alternatively, in other embodiments, the computing unit 801 may be configured to execute the method for a vehicle security check by any other appropriate approach (e.g., by means of firmware).

Various implementations of the systems and technologies described above herein maybe implemented in a digital electronic circuit system, an integrated circuit system, a field programmable gate array (FPGA), an application specific integrated circuit (ASIC), an application specific standard product (ASSP), a system on a chip (SOC), a complex programmable logic device (CPLD), computer hardware, firmware, software, and/or a combination thereof. The various implementations may include: being implemented in one or more computer programs, where the one or more computer programs may be executed and/or interpreted on a programmable system including at least one programmable processor, and the programmable processor may be a specific-purpose or general-purpose programmable processor, which may receive data and instructions from a storage system, at least one input apparatus and at least one output apparatus, and send the data and instructions to the storage system, the at least one input apparatus and the at least one output apparatus.

Program codes for implementing the method of the present disclosure may be compiled using any combination of one or more programming languages. The program codes may be provided to a processor or controller of a general purpose computer, a specific purpose computer, or other programmable apparatuses for data processing, such that the program codes, when executed by the processor or controller, cause the functions/operations specified in the flowcharts and/or block diagrams to be implemented. The program codes may be completely executed on a machine, partially executed on a machine, partially executed on a machine and partially executed on a remote machine as a separate software package, or completely executed on a remote machine or server.

In the context of some embodiments of the present disclosure, a machine readable medium may be a tangible medium which may contain or store a program for use by, or used in combination with, an instruction execution system, apparatus or device. The machine readable medium may be a machine readable signal medium or a machine readable storage medium. The computer readable medium may include, but is not limited to, electronic, magnetic, optical, electromagnetic, infrared, or semiconductor systems, apparatuses, or devices, or any appropriate combination of the above. A more specific example of the machine readable storage medium will include an electrical connection based on one or more pieces of wire, a portable computer disk, a hard disk, a random access memory (RAM), a read only memory (ROM), an erasable programmable read only memory (EPROM or flash memory), an optical fiber, a portable compact disk read only memory (CD-ROM), an optical storage device, a magnetic storage device, or any appropriate combination of the above.

To provide interaction with a user, the systems and technologies described herein may be implemented on a computer that is provided with: a display apparatus (e.g., a CRT (cathode ray tube) or an LCD (liquid crystal display) monitor) configured to display information to the user; and a keyboard and a pointing apparatus (e.g., a mouse or a trackball) by which the user can provide an input to the computer. Other kinds of apparatuses may also be configured to provide interaction with the user. For example, feedback provided to the user may be any form of sensory feedback (e.g., visual feedback, auditory feedback, or tactile feedback); and an input may be received from the user in any form (including an acoustic input, a voice input, or a tactile input).

The systems and technologies described herein may be implemented in a computing system that includes a back-end component (e.g., as a data server), or a computing system that includes a middleware component (e.g., an application server), or a computing system that includes a front-end component (e.g., a user computer with a graphical user interface or a web browser through which the user can interact with an implementation of the systems and technologies described herein), or a computing system that includes any combination of such a back-end component, such a middleware component, or such a front-end component. The components of the system may be interconnected by digital data communication (e.g., a communication network) in any form or medium. Examples of the communication network include: a local area network (LAN), a wide area network (WAN), and the Internet.

The computer system may include a client and a server. The client and the server are generally remote from each other, and generally interact with each other through a communication network. The relationship between the client and the server is generated by virtue of computer programs that run on corresponding computers and have a client-server relationship with each other. The server may be a cloud server, or a server of a distributed system, or a server combined with a blockchain.

It should be understood that the various forms of processes shown above may be used to reorder, add, or delete steps. For example, the steps disclosed in some embodiments of the present disclosure may be executed in parallel, sequentially, or in different orders, as long as the desired results of the technical solutions mentioned in some embodiments of the present disclosure can be implemented. This is not limited herein.

The above specific implementations do not constitute any limitation to the scope of protection of the present disclosure. It should be understood by those skilled in the art that various modifications, combinations, sub-combinations, and replacements may be made according to the design requirements and other factors. Any modification, equivalent replacement, improvement, and the like made within the spirit and principle of the present disclosure should be encompassed within the scope of protection of the present disclosure.

## Claims

1. A method for a vehicle security check, comprising:
obtaining (S110) target vehicle identification information of a target vehicle and hardware identification information of a target sensor of the target vehicle;
determining (S120) whether the target sensor is credible based on the hardware identification information of the target sensor, a pre-registered vehicle identification of a credible vehicle and a pre-registered hardware identification of a corresponding credible sensor;
performing (S130) a security check on the target vehicle based on current vehicle owner information of the target vehicle and current security scenario information under the condition that the target sensor is credible; and
turning off (S140) the target sensor under the condition that the target vehicle passes the security check.

2. The method according to claim 1, wherein
a step of determining whether the target sensor is credible based on the hardware identification information of the target sensor, the pre-registered vehicle identification of the credible vehicle and the pre-registered hardware identification of the corresponding credible sensor comprises:
sending (S121) the target vehicle identification and the hardware identification of the target sensor to a vehicle management platform for a query, the vehicle management platform storing the pre-registered vehicle identification of the vehicle and the pre-registered hardware identification of the corresponding credible sensor;
receiving (S122) a first query result returned by the vehicle management platform; and
determining (S123) that the target sensor is credible when the first query result indicates that the target vehicle identification and the hardware identification of the target sensor have been registered on the vehicle management platform.

3. The method according to claim 1 or 2, wherein
a step of performing the security check on the target vehicle based on the current vehicle owner information of the target vehicle and the current security scenario information under the condition that the target sensor is credible comprises:
obtaining (S131) the current vehicle owner information of the target vehicle and the current security scenario information;
determining (S132) whether the current vehicle owner information and the current security scenario information are credible based on pre-registered credible vehicle owner information and pre-registered credible security scenario information; and determining that the target vehicle passes the security check under the condition that the current vehicle owner information and the current security scenario information are credible.

4. The method according to claim 3, wherein
a step of determining whether the current vehicle owner information and the current security scenario information are credible based on the pre-registered credible vehicle owner information and the pre-registered credible security scenario information comprises:
sending (S1321) the current vehicle owner information and the current security information to a security management platform for a query, the security management platform storing the pre-registered credible vehicle owner information and the pre-registered credible security scenario information;
receiving (S1322) a second query result returned by the security management platform; and
determining (S1323) that the current vehicle owner information and the current security scenario information are credible when the second query result indicates that the current vehicle owner information and the current security information have been registered on the security management platform.

5. The method according to any one of claims 1 to 4, wherein
a step of turning off the target sensor comprises:
sending (S141) request information for turning off the target sensor for the target vehicle to a hardware management platform of a vehicle factory, so that the hardware management platform of the vehicle factory establishes a communication connection with the target vehicle, and sends a sensor turn-off instruction to the target vehicle to turn off the target sensor, wherein the hardware management platform of the vehicle factory stores vehicle identification information of each vehicle leaving the factory and hardware identification information of a sensor of the each vehicle.

6. The method according to claim 5, the method further comprising:
receiving (S450) an execution result of the turn-off instruction of the target vehicle returned by the hardware management platform of the vehicle factory; generating (S460) a pass certificate and outputting the pass certificate to the current vehicle owner, the pass certificate being used to indicate that the target vehicle is allowed to enter a target region;
obtaining (S470) the target vehicle identification information and the hardware identification information of the target sensor based on the pass certificate when the target vehicle leaves the target region; and
sending (S480) request information for turning on the target sensor for the target vehicle to the hardware management platform of the vehicle factory, so that the hardware management platform of the vehicle factory establishes a communication connection with the target vehicle, and sends a sensor turn-on instruction to the target vehicle to turn on the target sensor.

7. A system for a vehicle security check, the system comprising: a device for a security check, wherein
the device for a security check is configured to obtain target vehicle identification information of a target vehicle and hardware identification information of a target sensor of the target vehicle; determine whether the target sensor is credible based on the hardware identification information of the target sensor, a pre-registered vehicle identification of a credible vehicle and a pre-registered hardware identification of a corresponding credible sensor; perform a security check on the target vehicle based on current vehicle owner information of the target vehicle and current security scenario information under the condition that the target sensor is credible; and turn off the target sensor under the condition that the target vehicle passes the security check.

8. The system according to claim 7, the system further comprising: a vehicle management platform, wherein the vehicle management platform is configured to store the pre-registered vehicle identification of the vehicle and the pre-registered hardware identification of the corresponding credible sensor; and
the device for a security check determining whether the target sensor is credible based on the hardware identification information of the target sensor, the pre-registered vehicle identification of the credible vehicle and the s pre-registered hardware identification of the corresponding credible sensor comprises: sending the target vehicle identification and the hardware identification of the target sensor to the vehicle management platform for a query; receiving a first query result returned by the vehicle management platform; and determining that the target sensor is credible when the first query result indicates that the target vehicle identification and the hardware identification of the target sensor have been registered on the vehicle management platform.

9. The system according to claim 7 or 8, the system further comprising: a security management platform, wherein the security management platform is configured to store pre-registered credible vehicle owner information and pre-registered credible security scenario information; and
the device for a security check performing the security check on the target vehicle based on current vehicle owner information of the target vehicle and current security scenario information comprises: obtaining the current vehicle owner information of the target vehicle and the current security scenario information; sending the current vehicle owner information and the current security information to the security management platform for a query; receiving a second query result returned by the security management platform; determining that the current vehicle owner information and the current security scenario information are credible when the second query result indicates that the current vehicle owner information and the current security information have been registered on the security management platform; and determining that the target vehicle passes the security check under the condition that the current vehicle owner information and the current security scenario information are credible.

10. The system according to any one of claims 7 to 9, the system further comprising: a hardware management platform of a vehicle factory, wherein the hardware management platform of the vehicle factory is configured to store vehicle identification information of each vehicle leaving the factory and hardware identification information of a sensor of the vehicle; and
the device for a security check turning off the target sensor comprises: sending request information for turning off the target sensor for the target vehicle to the hardware management platform of the vehicle factory, so that the hardware management platform of the vehicle factory establishes a communication connection with the target vehicle, and sends a sensor turn-off instruction to the target vehicle to turn off the target sensor.

11. The system according to claim 10, wherein
the device for a security check is further configured to receive an execution result of the turn-off instruction of the target vehicle returned by the hardware management platform of the vehicle factory; generate a pass certificate and output the pass certificate to the current vehicle owner, the pass certificate being used to indicate that the target vehicle is allowed to enter the target region;
obtain the target vehicle identification information and the hardware identification information of the target sensor based on the pass certificate when the target vehicle leaves the target region; and send request information for turning on the target sensor for the target vehicle to the hardware management platform of the vehicle factory, so that the hardware management platform of the vehicle factory establishes a communication connection with the target vehicle, and sends a sensor turn-on instruction to the target vehicle to turn on the target sensor.

12. An apparatus for a vehicle security check, the apparatus comprising:
an information obtaining module (610), configured to obtain target vehicle identification information of a target vehicle and hardware identification information of a target sensor of the target vehicle;
a sensor credibility determination module (620), configured to determine whether the target sensor is credible based on the hardware identification information of the target sensor, a pre-registered vehicle identification of a credible vehicle and a pre-registered hardware identification of a corresponding credible sensor;
a security check module (630), configured to perform a security check on the target vehicle based on current vehicle owner information of the target vehicle and current security scenario information under the condition that the target sensor is credible; and
a sensor turn-off module (640), configured to turn off the target sensor under the condition that the target vehicle passes the security check.

13. The apparatus according to claim 12, wherein
the sensor credibility determination module is specifically configured to send the target vehicle identification and the hardware identification of the target sensor to a vehicle management platform for a query, the vehicle management platform storing the pre-registered vehicle identification of the vehicle and the pre-registered hardware identification of the corresponding credible sensor; receive a first query result returned by the vehicle management platform; and determine that the target sensor is credible when the first query result indicates that the target vehicle identification and the hardware identification of the target sensor have been registered on the vehicle management platform.

14. A non-transitory computer-readable storage medium storing computer instructions, wherein the computer instructions cause a computer to execute the method according to any one of claims 1-6.

15. A computer program product, comprising a computer program which, when executed by a processor, implements the method according to any one of claims 1-6.
